Europäisches Patentamt

European Patent Office

Office européen des brevets

(11) Veröffentlichungsnummer : **0 118 056**
**B1**

(12) **EUROPÄISCHE PATENTSCHRIFT**

(45) Veröffentlichungstag der Patentschrift :
04.05.88

(21) Anmeldenummer : 84101407.9

(22) Anmeldetag : 11.02.84

(51) Int. Cl.⁴ : **F 16 C 33/12, F 04 D 29/04**

(54) Gleitlager für den Läufer einer Pumpe.

(30) Priorität : 04.03.83 DE 3307726

(43) Veröffentlichungstag der Anmeldung :
12.09.84 Patentblatt 84/37

(45) Bekanntmachung des Hinweises auf die Patenterteilung : 04.05.88 Patentblatt 88/18

(84) Benannte Vertragsstaaten :
AT BE CH DE FR GB IT LI LU NL SE

(56) Entgegenhaltungen :
FR-A- 1 407 672
FR-A- 1 587 621
FR-A- 2 027 384
FR-A- 2 278 957
FR-A- 2 312 669
FR-A- 2 320 436
GB-A- 1 102 969
GB-A- 1 437 532
US-A- 4 152 099
Chemie-Anlagen und Verfahren, September 1982,
Seiten 58,59

(73) Patentinhaber : Franz Klaus Union Armaturen Pumpen
GmbH & Co.
Blumenfeldstrasse 18
D-4630 Bochum 1 (DE)

(72) Erfinder : Knorr, Manfred
Schützenstrasse 264
D-4630 Bochum 6 (DE)

(74) Vertreter : Patentanwälte Wenzel & Kalkoff
Ruhrstrasse 26 Postfach 2448
D-5810 Witten (DE)

## Beschreibung

Die Erfindung betrifft einen Läufer und eine Lagerung einer Pumpe, insbesondere einer Kreiselpumpe oder einer Verdrängerpumpe, deren Läufer direkt mit dem Innenrotor eines durch ein Spaltrohr oder durch einen Spalttopf abgedichteten magnetischen Antriebes verbunden ist, und deren Lagerung aus einem einzigen radialen Lager mit benachbarten Axiallagern besteht, wobei der Lagerwerkstoff für den jeweils stehenden und umlaufenden Lagerteil aus einem harten, oxidkeramischen Werkstoff wie $Al_2O_3$ oder $ZrO_2$ und/oder nicht oxidkeramischen Werkstoff wie SiC, $Si_3N_4$ oder dergleichen besteht.

Ein Läufer und eine Lagerung dieser Gattung sind aus einer Veröffentlichung in der Zeitschrift « Chemie-Anlagen + Verfahren », Konradin-Verlag, September 1982, Seiten 58 und 59 bekannt. Die eingebauten Lager sind dabei axial sowie radial hydraulisch entlastet, um eine möglichst geringe absolute Lagerbelastung herbeizuführen. Dabei entsteht eine Betriebssituation, in der die Lagerung wenig definiert ist und insbesondere das Radiallager « "auf der Kante » laufen kann. Eine entsprechende Lauflage kann durch unterschiedliche Eigengewichte des Laufrades bzw. des Innenrotors des magnetischen Antriebes oder auch durch Magnetkräfte entstehen. Es kommt dann zu einem erheblichen Verschleiß im Kantenbereich, der in kurzer Zeit die Zerstörung des gesamten Lagers nach sich ziehen kann.

Aus der britischen Patentschrift 1,437,532 ist eine ähnliche Anordnung eines Läufers und einer Lagerung im Zusammenhang mit einem Antrieb bekannt, der nach dem Wirbelstromprinzip arbeitet. Bei der Pumpe gemäß der britischen Patentschrift ist ebenfalls eine Axialschubentlastung vorgesehen, die sich aufgrund der magnetischen Antriebskräfte einstellt. Die in der Antriebsscheibe des Läufers erzeugten Wirbelströme sorgen nicht nur dafür, daß der Läufer mit dem benachbarten magnetischen Drehfeld umläuft, sondern bewirken auch eine Anziehung in Axialrichtung des Läufers in Richtung auf die benachbarten Spulen, also gegen die Saugrichtung des Läufers. Bei starker Saugleistung der Pumpe und entsprechend starkem Magnetfeld infolge eines größeren Schlupfes zwischen der Wirbelstromplatte und dem umlaufenden Magnetfeld sind auch die Magnetkräfte in Axialrichtung stärker, so daß ein annähernd selbsttätiger Axialschubausgleich vorhanden ist. Im übrigen handelt es sich bei dieser Pumpe um eine Type mit einer geringen Leistung, was an der Bauform des Laufrades erkennbar ist. Die infolge der geringen Leistung zu erwartende Lagerbelastung ist deshalb insgesamt sehr niedrig.

Beiden Pumpen, also sowohl der Pumpe gemäß der britischen Patentschrift als auch der Pumpe gemäß der CAV-Veröffentlichung ist gemeinsam, daß die Lagerung in Richtung der Mittelachse des Läufers sehr lang ist, so daß beinahe schon von einer doppelten Lagerung gesprochen werden kann. Aus der Lagergestaltung läßt sich ableiten, daß einem möglichen Kantenlauf durch eine annähernd doppelte Lagerung, zumindest jedoch durch eine besonders lange Lagerung entgegengewirkt werden soll. Das gilt im übrigen auch für die Pumpen gemäß den französischen offenlegungsschriften 2,278,957 sowie 2,320,436, bei denen jeweils eine zweifache Lagerung vorgesehen ist, mit jeweils einem gewissen Abstand zwischen den Lagern jeder Pumpe. Während zwei mit einem Abstand zueinander angeordnete Lagerungen relativ aufwendig sind, sind besonders lange Lager schmieranfällig, da die Durchflutung wegen der Enge des Lagerspaltes nicht beliebig gesteigert werden kann.

Es ist Aufgabe der Erfindung einen Läufer und eine Lagerung der eingangs genannten Art so auszulegen, daß eine relativ kurze Lagerung mit allen Vorteilen einer günstigen Schmierung eingesetzt werden kann und ein Kantenlauf der Radiallagerung so gut wie ausgeschlossen ist, ohne ein zusätzliches Radiallager vorsehen zu müssen.

Zur Lösung dieser Aufgabe schlägt die Erfindung vor, daß der Läufer im Betriebszustand einen das eine Axiallager zum Tragen bringenden Axialschub einer Größe aufweist, die zur im wesentlichen achsparallelen Ausrichtung des Läufers zu dem Radiallager gegen hydraulische, schwerkraftbedingte und magnetische Auslenkkräfte aus dieser Lage ausreicht.

Die Erfindung unterläßt also die hydraulische Entlastung des Lagers und nimmt bewußt einen relativ starken Axialschub des Läufers in Kauf, so daß infolge des Aufrichteffektes ein Kantenlauf nicht mehr auftreten kann. Die sehr harten und verschleißarmen, oben genannten Werkstoffe vermögen auf Dauer Kräfte aufzunehmen, die anderen Werkstoffen nicht zugemutet werden können. Folglich konnte bisher auch bei jenen der Effekt des Aufrichtens eines Läufers in einem einzigen Radiallager infolge eines dauernd und stark beaufschlagten Axiallagers nicht angewandt werden. Die Erfindung macht sich also einen bisher nicht erkannten Vorteil der bekannten sehr harten Lagerwerkstoffe zunutze.

Eine gute Durchflutung und damit Schmierung der Axiallager wird dann erreicht, wenn jede Axiallagerscheibe mit mindestens einer konzentrischen Nut und mehreren Radialnuten versehen ist. Ein Teil der in die Axiallager gelangten Flüssigkeit wird über die radialen Nuten ohne weitere Schmieraufgabe nach Art eines Hilfslaufrades aus dem Lager herausgeschleudert, so daß eine gute Durchflutung des gesamten Lagers vorhanden ist.

Die anderen in die umlaufende Nut gelangenden Flüssigkeitsteile dienen zur Schmierung des Axiallagers, dessen Anlagefläche aus einzelnen Segmenten zwischen den Radialnuten besteht. Die starke Durchflutung der Axiallager infolge der radialen Nuten in den Axiallagerscheiben in Verbindung mit der getroffenen Werkstoffwahl sorgt dafür, daß insbesondere die Axiallager sehr hoch belastbar sind. Dazu trägt auch ihr hoher Selbstreinigungseffekt bei, der wiederum unter anderem von der hohen Durchflutung abhängig ist.

Bei einer kräftigen Schubausbildung in Axialrichtung richtet das Axiallager den Läufer auf, so daß er im Radiallagerbereich seine Kantenlage verliert, und statt dessen eine optimale Flächenberührung eintritt. Wegen der hohen Belastbarkeit der verwendeten Werkstoffe kann erreicht werden, daß mit einer einzigen Lagerkonstruktion eine bisher nicht gekannte Vielfalt von Bautypen und Baugrößen jeglicher Art von Pumpen ausgestattet werden kann, ohne jemals an die Grenzen der Belastbarkeit insbesondere der Axiallager zu gelangen. Es können also geschlossene oder offene Laufräder, mehrstufige Pumpen, Niederdruckoder Hochdruckpumpen in unterschiedlicher Größe und Leistung mit einer einzigen Lagertype und auch Lagerabmessung ausgestattet werden. Die Betriebssicherheit wird insgesamt verbessert, da die Wirkung des Axiallagers zum Aufrichten des Läufers insgesamt das Lagerverhalten verbessert und Zerstörungen durch festgesetzte Magnetpartikel ebenfalls ausgeschlossen sind.

Nachfolgend wird ein Ausführungsbeispiel der Erfindung, das in der Zeichnung dargestellt ist, näher erläutert ; in der Zeichnung zeigen :

Figur 1 eine Längsschnittansicht durch ein Ausführungsbeispiel eines Läufers und einer Lagerung gemäß der Erfindung,

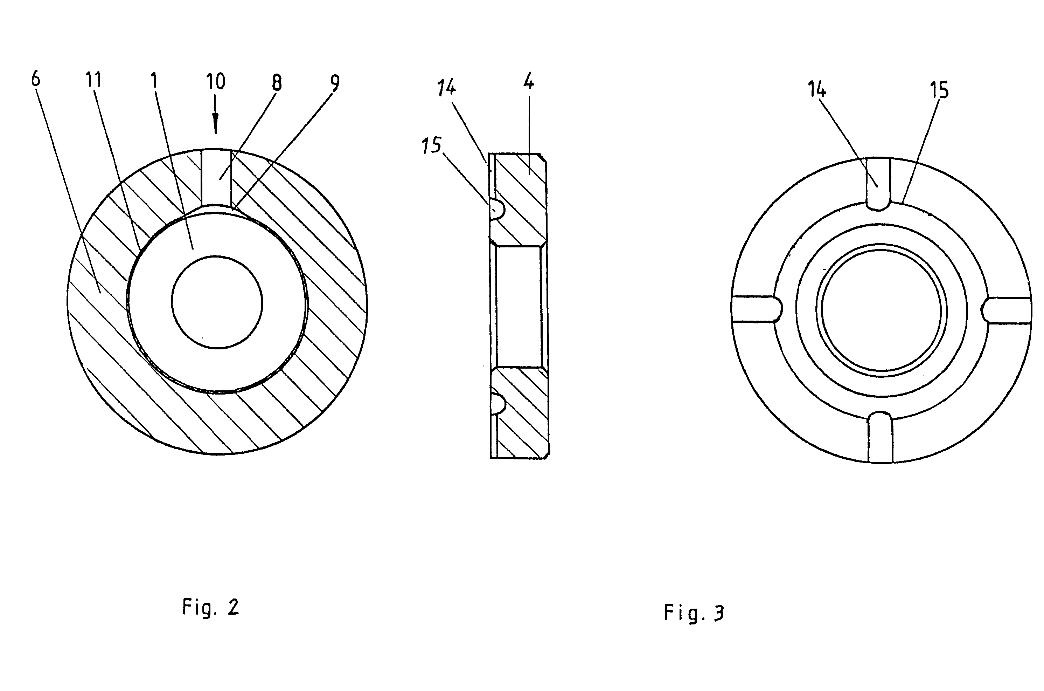

Figur 2 einen Querschnitt ausschließlich durch die Lagerteile einer Lagerung gemäß Figur 1 und

Figur 3 einen Längsschnitt sowie eine Draufsicht auf eine Axiallagerscheibe der Lagerung gemäß Figur 1.

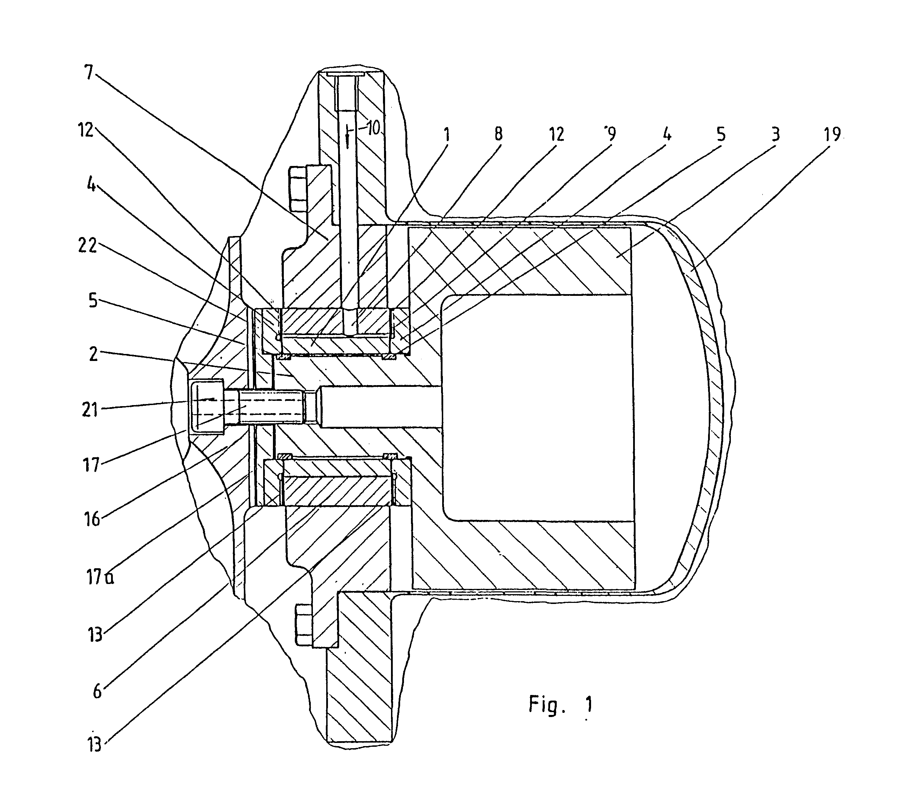

In der Figur 1 ist im Ausschnitt als Schnittansicht im wesentlichen der Läufer eines Pumpenaggregates dargestellt, der an seinem einen Ende durch ein Laufrad 16 mit einer darunterliegenden Zentrierscheibe 22 und seinem anderen Ende durch den Innenmagnetrotor 3 einer Permanentmagnetkupplung gebildet ist, wobei zwischen diesen beiden Bauteilen ein Tragzapfen 2 zur Aufnahme einer Lagerhülse 1 angeordnet ist. An ihren Stirnseiten liegen.

Axialscheiben 4 an, die mit Hilfe eines Gewindebolzens 21 über das Laufrad 16 auf dem Tragzapfen 2 festgespannt sind. Die Axialscheiben 4 sowie die Lagerhülse 1 drehen sich demnach mit dem Läufer des Pumpenaggregates. Da der Tragzapfen 2 und die Lagerhülse 1 bzw. die Axialscheiben 4 unterschiedliche Wärmeausdehnungskoeffizienten besitzen und ein Temperatureinsatz bis 400 °C und deutlich unter 0 °C möglich ist, werden zwischen den sich ungleich ausdehnenden Teilen Ringe oder Scheiben 5 vorzugsweise aus Graphit eingelegt, die eventuelle Druckspannungen auf die relativ empfindlichen Axialscheiben 4 und die Lagerhülse 1 eliminieren. In einen Lagerträger 7, der als Trennwand zwischen dem Pumpenraum und dem Kupplungsraum dient, ist eine feststehende Lagerbüchse 6 eingedrückt, die sich in ihrer funktionsgemäßen Lage zwischen den Axiallagerscheiben 4 und außerhalb der Lagerhülse 1 befindet. Die Axiallagerscheiben 4, die Lagerhülse 1 und die Lagerbüchse 6 bestehen aus Aluminiumoxid ($Al_2O_3$) oder aus Zirkonoxid ($ZrO_2$), also aus oxidkeramischen Werkstoffen. Diesem Werkstoff gleichwertig ist Siliziumkarbid (SiC), Siliziumnitrid ($Si_3N_4$) oder ähnliche Werkstoffe, die ebenfalls für die genannten Bauteile mit vorteilhafter Wirkung verwendet werden können.

Für die Schmierung des Radial- und Axiallagers und auch zur Kühlung im Falle einer thermisch hochbeanspruchten Pumpe wird gegebenenfalls gefiltertes oder gekühltes Fördermedium 10 über eine Radialbohrung 8 in der Lagerbüchse 6 dem Radiallager zugeführt, von wo es sich seitlich zu den Axiallagerscheiben 4 verteilt. Dabei ist eine Schmiertasche 9 innerhalb der Lagerbüchse 6 (Fig. 3) dienlich, die einen Teil der Schmier- und Kühlflüssigkeit in Längsrichtung des Radiallagers verteilt. Der andere Teil gelangt in den Schmierspalt 11 und von dort ebenfalls nach und nach zu den Radiallagerrändern.

An den Stirnseiten der Lagerbüchse 6 liegen die Axiallagerscheiben 4 mit Laufspiel an, mit anderen Worten, die Länge der Lagerhülse 1 ist so gewählt, daß unter Berücksichtigung einer Fertigungstoleranz bezüglich der Axiallagerscheiben 4 gegenüber der Lagerbüchse 6 das erforderliche Betriebsspiel vorhanden ist. Die so gebildeten Axiallager werden von der Schmier- und Kühlflüssigkeit gespeist, die aus der Schmiertasche 9 und aus dem Schmierspalt 11 seitlich austreten. Diese Teilströme gelangen in eine Umfangsnut 15 (Fig. 3), die den Grund eines Spaltes 13 für jedes Axiallager bildet. Ein Teil der in die Axiallager gelangten Flüssigkeit wird über radiale Bohrungen 14 ohne weitere Schmieraufgabe nach Art eines Hilfslaufrades aus dem Lager herausgeschleudert, so daß eine gute Durchflutung des gesamten Lagers vorhanden ist. Die anderen in die umlaufende Nut 15 gelangenden Flüssigkeitsteile dienen zur Schmierung des Axiallagers, dessen Anlageflächen aus einzelnen Segmenten zwischen den radialen Nuten 14 besteht. Die Segmente sind in sich völlig eben und feststehend, wodurch sichergestellt ist, daß das Lager für beide Drehrichtungen verwendbar ist.

Die starke Durchflutung der Axiallager infolge der radialen Nuten 14 in den Axiallagerscheiben 4 und vor allen Dingen die Werkstoffwahl sorgen dafür, daß insbesondere die Axiallager sehr hoch belastbar sind. Dazu trägt auch ihr hoher Selbstreinigungseffekt bei, der wiederum unter anderem von der hohen Durchflutung abhängig ist. Die hohe Belastbarkeit ist quasi der Schlüssel für einen störungsfreien Betrieb des gesamten Lagers für annähernd jeden Anwendungsfall. Das Pumpenaggregat ist nämlich insgesamt so ausgelegt, daß ein relativ großer Axialschubes vorhanden ist, der eines der Axiallager — in der Regel das dem Innenmagnetrotor 3 zugewandte — schon bei geringer Drehzahl zur Anlage bringt, allerdings unter Beibehaltung eines tragfähigen

0 118 056

Schmierfilmes. Diese Reaktionskraft aufgrund des Axiallagers führt zu einer Ausrichtung des gesamten Pumpenläufers aus einer möglicherweise gekippten Lage heraus, in der die Mittelachse des Läufers nicht vollständig parallel zur Mittelachse der Lagerbüchse 6 ausgerichtet ist. Diese Kipplage rührt von einer statischen Ungleichgewichtslage des Läufers innerhalb des Lagers her. Diese Ausrichtkraft infolge des aufgefangenen Axialschubes führt bei schon niedrigen Drehzahlen zu einer im wesentlichen achsparallelen Lage des Pumpenläufers zu der zugeordneten Lagerbüchse 6, wodurch das Radiallager stark geschont wird und die unerwünschte Kantenlauflage vermieden wird. Im übrigen können sich an keiner Stelle des Lagerbereiches Magnetpartikel festsetzen, da keiner der Lagerwerkstoffe ferromagnetisierbar ist, so daß Magnetpartikel daran nicht haften.

Obwohl die Axiallagerscheiben 4 und die Lagerhülse 1 aufgrund des gewählten Materials relativ bruchempfindlich sind, kann ein gewisser Druck auf diese Bauteile ausgeübt werden, so daß sie kraftschlüssig ohne Mitnehmerstifte und dergleichen auf dem Tragzapfen 2 festgespannt werden können. Dazu dient der Gewindebolzen 21, der das Laufrad 16 stirnseitig gegen den Tragzapfen 18 zieht und dabei über eine entsprechende Ausnehmung in dem Laufrad 16 die Lagerteile mit verspannt.

Die auf der dem Innenmagnetrotor 3 zugewandten Seite des Lagers austretende Schmier- und Kühlflüssigkeit fließt auf der Außenseite des Rotors 3 innerhalb des zu der permanentmagnetischen Kupplung gehörenden Spalttopfes 19 entlang und gelangt von dort über den Innenraum des Innenmagnetrotors 3 zu einer Bohrung 17 innerhalb des Gewindebolzens 21 zur Saugseite des Laufrades. Abweichend davon kann der Kopf des Gewindebolzens 21 geschlossen sein, wobei dann die Schmier- und Kühlflüssigkeit durch radiale Bohrungen 17a auf der Rückseite des Laufrades unter einem Hilfsförderradeffekt austritt.

**Patentansprüche**

1. Läufer (3/16) und Lagerung einer Pumpe, insbesondere einer Kreiselpumpe oder einer Verdrängerpumpe, deren Läufer (3/16) direkt mit dem Innenrotor (3) eines durch ein Spaltrohr oder einen Spalttopf (19) abgedichteten magnetischen Antriebes verbunden ist, und deren Lagerung aus einem einzigen radialen Lager (1/6) und jeweils benachbarten Axiallagern (4/6) besteht, wobei der Lagerwerkstoff für den jeweils stehenden und umlaufenden Lagerteil aus einem harten, oxidkeramischen Werkstoff wie $Al_2O_3$ oder $ZrO_2$ und/ oder nicht oxidkeramischen Werkstoff wie SiC, $Si_3N_4$ oder dergleichen besteht, dadurch gekennzeichnet, daß der Läufer (3/16) im Betriebszustand einen das eine Axiallager (4/6) zum Tragen bringenden Axialschub einer Größe aufweist, die zur im wesentlichen achsparallelen Ausrichtung des Läufers (3/16) zu dem Radiallager (1/6) gegen hydraulische, schwerkraftbedingte und magnetische Auslenkkräfte aus dieser Lage ausreicht.

2. Läufer und Lagerung nach Anspruch 1, dadurch gekennzeichnet, daß die Laufseite jeder Axialscheibe (4) mit mindestens einer konzentrischen Nut (15) und mehreren Radialnuten (14) versehen ist.

**Claims**

1. Rotor (3/16) and bearing of a pump, in particular of a centrifugal pump or of a positive-displacement pump, the rotor (3/16) of which is connected directly to the inner rotor (3) of a magnetic drive sealed off by a split tube or a split pot (19), and the bearing of which consists of a single radial bearing (1/6) and in each case neighbouring axial bearings (4/6), the bearing material for the respective stationary and rotating bearing part consisting of a hard, oxide ceramic material such as $Al_2O_3$ or $ZrO_2$ and/or non oxide ceramic material such as SiC, $Si_3N_4$ or the like, characterized in that the rotor (3/16) has, in the operating state, an axial thrust, bringing the one axial bearing (4/6) into effect, of a size which is sufficient for the substantially axial-parallel alignment of the rotor (3/16) with respect to the radial bearing (1/6) against hydraulic, gravity-induced and magnetic deflection forces out of this position.

2. Rotor and bearing according to Claim 1, characterized in that the running side of each axial disc (4) is provided with at least one concentric groove (15) and several radial grooves (14).

**Revendications**

1. Rotor (3/16) et dispositif de paliers de pompe, notamment de pompe centrifuge ou de pompe refoulante, le rotor (3/16) étant relié directement au rotor interne (3) d'un accouplement magnétique enfermé de façon étanche dans un tube ou un pot avec jeu, et le dispositif de paliers étant constitué d'un palier radial unique (1/6), et respectivement de paliers axiaux voisins (4, 6), le matériau de palier des parties respectivement fixe et tournante étant constitué de matériaux durs qui sont des oxydes céramiques comme $Al_2O_3$ ou $ZrO_2$ et/ou de matériaux qui ne sont pas des oxydes céramiques, comme SiC, $Si_3N_4$ ou similaires, caractérisé par le fait que le rotor (3/16) en fonctionnement, présente une poussée axiale permettant de porter l'un des paliers axiaux (4/16) dont la grandeur est suffisante pour orienter essentiellement axialement le rotor (3/16) par rapport au palier radial (1/6), à l'encontre des forces hydrauliques, dues à la masse, et magnétiques, tendant à l'éloigner de cette position.

2. Rotor et dispositif de paliers selon la revendication 1, caractérisé par le fait que la face de roulement de chaque disque axial (4) présente au moins une rainure concentrique (15) et plusieurs rainures radiales (14).

Fig. 1

Fig. 3

Fig. 2